# EUROPÄISCHE PATENTSCHRIFT

(11) **EP 0 769 401 B1**
(45) Veröffentlichungstag und Bekanntmachung des Hinweises auf die Patenterteilung: **20.10.1999**
(21) Anmeldenummer: 96113368.3
(22) Anmeldetag: 21.08.1996
(51) Int. Cl.: B60J 7/20

(54) **Abdeckklappe für eine oberhalb eines Verdecklagers befindliche Durchlassöffnung in einer Bordwand eines Fahrzeuges**
Vehicle side body vovering elements for framework articulation recesses
Eléments de couverture des passages des articulations d'une capote pliante sur les parois latérales d'un véhicule

(30) Priorität: 18.10.1995 DE 19538738
(43) Veröffentlichungstag der Anmeldung: 23.04.1997
(73) Patentinhaber: Dr.Ing.h.c. F. Porsche Aktiengesellschaft, 70435 Stuttgart (DE)
(72) Erfinder: Schmitt, Hans-Jürgen, 75417 Mühlacker (DE); Pfertner, Kurt, 71299 Wimsheim (DE); Aydt, Matthias, 71735 Eberdingen (DE); Henn, Uwe, 71299 Wimsheim (DE)

(56) Entgegenhaltungen:
- EP-A- 0 353 203
- DE-A- 3 939 145
- DE-C- 3 801 148
- DE-C- 3 903 679

## Beschreibung

Die Erfindung betrifft eine Abdeckklappe für eine oberhalb eines Verdecklagers befindliche Durchlaßöffnung in einer Bordwand eines Fahrzeuges gemäß dem Oberbegriff des Patentanspruchs 1. In der gattungsgemäßen DE-A-3 939 145 ist eine solche Abdeckklappe beschrieben.

Bei einem bekannten Serienkraftwagen (z.B. BMW Cabriolet) ist das Klappverdeck in mehrere Viergelenkabschnitte unterteilt, so daß es in der zurückgeschwenkten Ablagestellung in einem relativ kurzen, jedoch eine große Bauhöhe aufweisenden Verdeckkasten aufgenommen wird. Bei einer derartigen Verdeckausgestaltung ergibt sich eine relativ kleine Durchlaßöffnung für das Verdeckgestänge, so daß die Abdeckklappen auf ihren dem Fahrzeuginnenraum zugewandten Längsseiten scharnierartig an der zugeordneten Bordwand angeschlagen sind. Beim Herausschwenken des Verdecks werden die federbelasteten Abdeckklappen durch das Verdeckgestänge nach oben in eine aufrechte Freigabestellung überführt, in der sie den angrenzenden Aufbau nach oben hin überragen.

Aufgabe der Erfindung ist es, für ein Fahrzeug mit einem eine geringe Bauhöhe aufweisenden Verdeckkasten sowie einem an jeder Längsseite lediglich eine Viergelenkanordnung aufweisenden Verdeckgestänge für die sich ergebende relativ großflächige Durchlaßöffnung eine Abdeckklappe vorzusehen, die in ihrer Freigabestellung wenig Bauraum zu ihrer Unterbringung benötigt und bei geschlossenem Klappverdeck nicht in den Fahrzeuginnenraum hineinragt.

Erfindungsgemäß wird diese Aufgabe durch die Merkmale des Patentanspruchs 1 gelöst. Weitere, die Erfindung in vorteilhafter Weise ausgestaltende Merkmale enthalten die Unteransprüche.

Die mit der Erfindung hauptsächlich erzielten Vorteile sind darin zu sehen, daß die großflächige, mit einer schlittenartigen Führungseinrichtung zusammenwirkende Abdeckkklappe in ihrer aufrechten Freigabestellung versenkt unterhalb der Durchlaßöffnung verläuft, wodurch die Abdeckkklappe bei geschlossenem Klappverdeck nicht in den Fahrzeuginneraum hineinragt und die freie Gestaltung des Klappverdecks (z.B. Innenhimmel) nicht beeinträchtigt wird.

Die Bewegung der schlittenartigen Führungseinrichtung bzw. der Abdeckklappe ist an die Kinematik des angrenzenden Verdeckkastendeckels angeschlossen, dergestalt, daß beim Öffnen des Verdeckkastendeckels die Abdeckklappe selbsttätig von der Abdeckstellung in die Freigabestellung bewegt wird.

Der Verdeckkastendeckel ist über einen Bowdenzug mit der Führungseinrichtung der Abdeckklappe verbunden, wobei über den Bowdenzug die Abdeckplatte geöffnet wird. Geschlossen wird die Abdeckklappe durch eine Zugfeder, die den Schlitten hochzieht. Die Abdeckklappe verschwindet duch eine kombinierte Dreh- und Linearbewegung unterhalb der angrenzenden Verkleidung. Die Steuerung der Drehbewegung erfolgt durch zumindest eine Kurvenbahn. Die Abdeckklappe ist über einen Scharnierbolzen mit dem Schlitten der Führungseinrichtung verbunden. Der Schlitten ist unter Zwischenschaltung von Gleitelementen an einer Führungsschiene der Führungseinrichtung verschiebbar in Lage gehalten.

Die Abdeckklappe paßt in ihrer vertikalen Freigabestellung in den Bauraum zwischen abgelegtem Klappverdeck und Fondinnenraum bzw. abgelegten Klappverdeck und 3-Punkt-Gurt.

Eine Sperrklinke verhindert das Schließen der Abdeckklappe, wenn bei geschlossenem Klappverdeck der Verdeckkastendeckel schließt. Die Sperrklinke legt den Schlitten in seiner unteren Endstellung fest. Erst durch das nach hinten Schwenken des Verdeckgestänges wird die Sperrklinke entriegelt und die Abdeckklappe von ihrer Freigabestellung in die Abdeckstellung bewegt.

Ein Rasthebel arretiert den Schlitten bei geschlossener Abdeckklappe und verhindert, daß die Abdeckklappe bei Belastung nach unten abtaucht. Ferner wird der Stützlenker blockiert.

Die Führungseinrichtung ist an seinem seitlich außenliegenden, aufrechten Holm eines aufbauseitig befestigten querverlaufenden Hilfsrahmens befestigt.

Ein Ausführungsbeispiel der Erfindung ist in den Zeichnungen dargestellt und wird im folgenden näher beschrieben.

Es zeigen
- Fig. 1: eine perspektivische Teilansicht von schräg hinten auf den fondseitigen Fahrgastraum, den Verdeckkastendeckel, die Fondseitenverkleidung, eine querverlaufende hintere Verkleidung und eine Abdeckklappe für eine Durchlaßöffnung eines Verdeckgestänges eines Cabriolets,
- Fig. 2: eine Einzelheit X der Fig. 1 in größerem Maßstab,

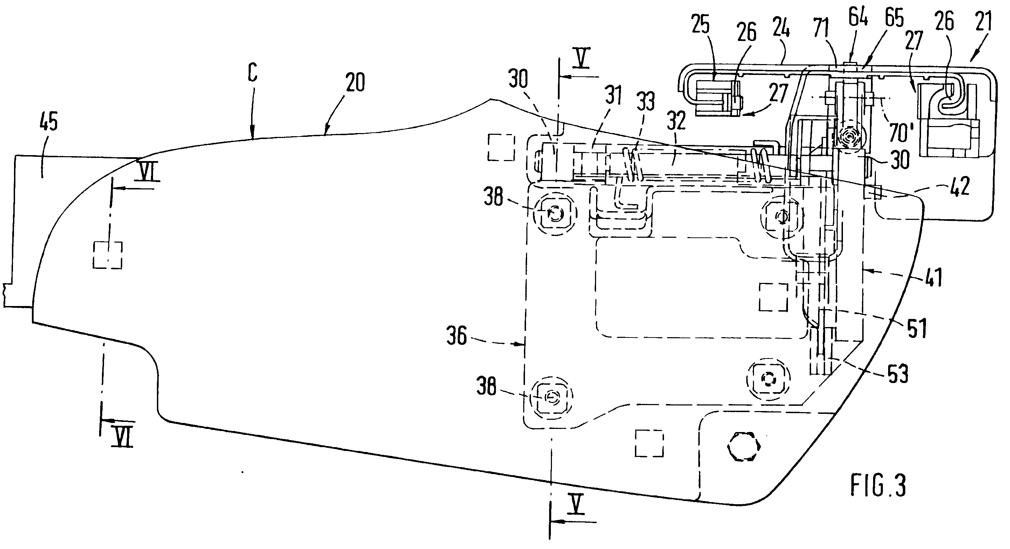

- Fig. 3: eine Ansicht von oben auf die Abdeckklappe und die Führungseinrichtung in Abdeckstellung C der Abdeckklappe,
- Fig. 4: die Führungseinrichtung für die Abdeckklappe in Explosionsdarstellung,
- Fig. 5: einen Schnitt nach der Linie V-V der Fig. 3 in größerem Maßstab und um 90° gedreht,
- Fig. 6: einen Schnitt nach der Linie VI-VI der Fig. 3 in größerem Maßstab,
- Fig. 7: einen Schnitt nach der Linie VII-VII der Fig. 2 in größerem Maßstab,
- Fig. 8: einen Schnitt nach der Linie VIII-VIII der Fig. 2 in größerem Maßstab,
- Fig. 9: einen Schnitt nach der Linie VIIII-VIIII der Fig. 2 in größerem Maßstab,
- Fig. 10: einen Horizontalschnitt durch einen seitlichen Holm eines aufbauseitigen Hilfsrahmens mit der daran befestigten Führungseinrichtung,
- Fig. 11: eine perspektivische Ansicht von schräg hinten auf die Abdeckklappe und die Führungseinrichtung in der Abdeckstellung,
- Fig. 12: eine perspektivische Ansicht von schräg hinten auf die Abdeckklappe und die Führungseinrichtung in der aufrechten, versenkten Freigabestellung der Abdeckklappe und
- Fig. 13: eine Seitenansicht auf den die Führungseinrichtung mit dem Scharnier des Verdeckkastendeckels verbindenden Bowdenzug.

Ein durch ein Cabriolet 1 gebildetes Fahrzeug weist ein Verdeck 2 auf, das sich in einer nicht näher dargestellten Schließstellung A von einem Windschutzscheibenrahmen - einen Fahrgastraum überspannend - bis zu einem Heckbereich 3 erstreckt. In der zurückgeklappten Ablagestellung B ist das Verdeck 2 in einem heckseitigen Verdeckkasten 4 aufgenommen, der zumindest abschnittsweise nach oben hin durch einen Verdeckkastendeckel 5 abgedeckt ist. Das Verdeck 2 wird durch ein Klappverdeck, ein Faltverdeck oder mehrere aneinandergesetzte formsteife Verdeckabschnitte gebildet und setzt sich aus einem an seitlich außenliegenden Verdecklagern 6 schwenkbar angelenkten Verdeckgestänge 7 und einem nicht näher dargestellten Verdeckbezug zusammen.

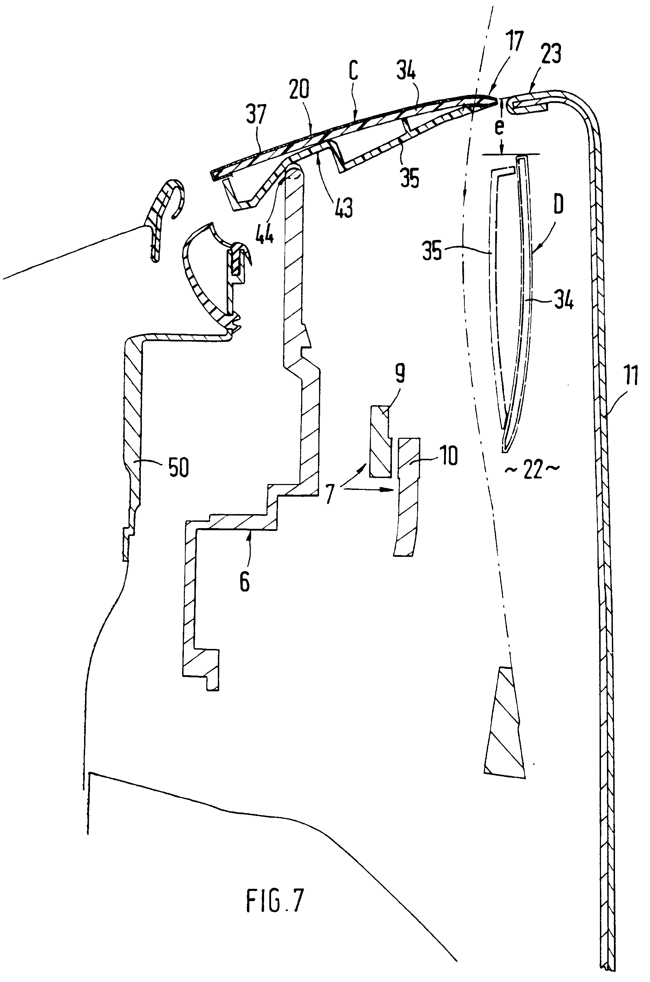

Im Ausführungsbeispiel umfaßt das Verdeckgestänge 7 ein großflächigen formsteifen vorderen Verdeckabschnitt 8, der an seinen beiden Längsseiten über je zwei eine Viergelenkanordnung bildende Verdecklenker 9, 10 an den aufbauseitig festgelegten Verdecklagern 6 angelenkt ist (Fig. 7).

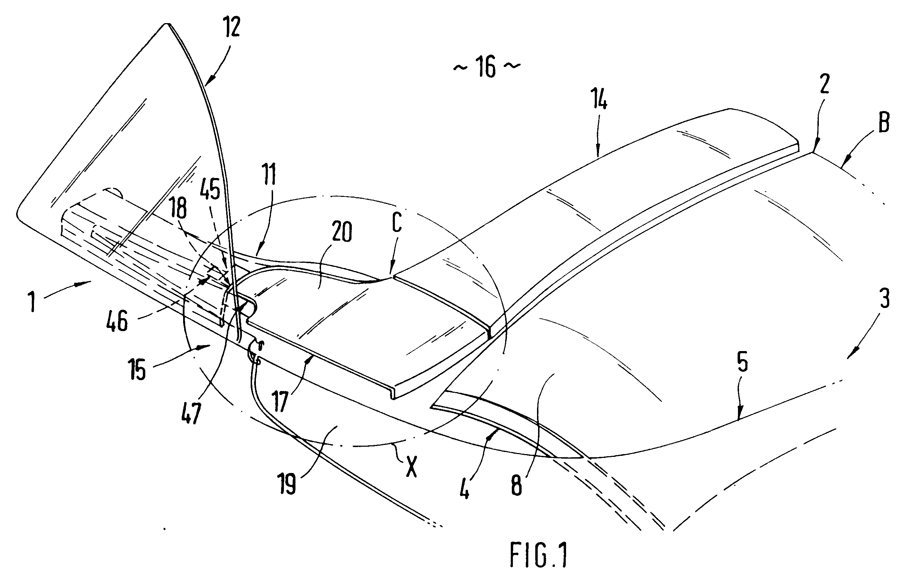

Der großflächige vordere Verdeckabschnitt 8 bildet gemäß Fig.1 in seiner zurückgeklappten Stellung B eine dem Verdeckkastendeckel 5 vorgelagerte Abdeckung des Verdeckkastens 4.

In Fig. 1 sind der Verdeckkastendeckel 5, der zurückgeklappte vordere Verdeckabschnitt 8, eine seitlich außenliegende Fondseitenverkleidung 11, ein Fondseitenfenster 12 und ein einen aufbauseitig befestigten, querverlaufenden Hilfsrahmen 13 nach oben hin abdeckende hintere Verkleidung 14 sowie ein Seitenteil 15 der Karosserie dargestellt.

Die beiden seitlich außenliegenden Fondseitenverkleidungen 11 und die nicht näher dargestellten, dem Hilfsrahmen 13 vorgelagerten, sich in Querrichtung erstreckenden Rückenlehnen einer Hintersitzanlage definieren den fondseitigen Fahrzeuginnenraum 16.

In einer Bordwand des Cabriolets ist eine Durchlaßöffnung 17 vorgesehen, durch die die seitlich außenliegend angeordneten Verdecklenker 9, 10 des Verdeckgestänges 7 bei geschlossenem Verdeck 2 hindurchragen. Die aufgrund der Verdeckkinematik relativ großflächige, an beiden Fahrzeuglängsseiten vorgesehene Durchlaßöffnung 17 erstreckt sich zwischen einem äußeren Rand der querverlaufenden hinteren Verkleidung 14, dem hinteren Randbereich 18 der Fondseitenverkleidung11, dem seitlich außenliegenden, längsverlaufenden Abschnitt 19 des Verdeckkastendeckels 5 und dem angrenzenden Abschnitt des zurückgeklappten vorderen Verdeckabschnitts 8 und wird durch diese Bauteile begrenzt.

Bei zurückgeschwenktem Verdeck 2 (Ablagestellung B) ist die Durchlaßöffnung 17 weitgehend durch eine Abdeckklappe 20 verschlossen. Die von einer Abdeckstellung C über eine kombinierte Dreh- und Linearbewegung in eine Freigabestellung D und umgekehrt überführbare Abdeckklappe 20 steht erfindungsgemäß mit einer schlittenartigen Führungseinrichtung 21 in Wirkverbindung und verläuft in ihrer aufrechten Freigabestellung D völlig versenkt unterhalb der Durchlaßöffnung 17 in einem zwischen dem abgelegten Verdeck 2 und dem Fondinneraum gebildeten Aufnahmeraum 22 (Fig. 7).

In der Freigabestellung D ist die Abdeckklappe 20 etwa parallel zur angrenzenden Fondseitenverkleidung 11 ausgerichtet und verläuft seitlich neben den Verdecklenkern 9, 10 des Verdeckgestänges 7 (Fig. 7). Der obere Rand der Abdeckklappe 20 verläuft in der Freigabestellung D mit Abstand e zu einem höherliegenden abgestellten Randbereich 23 der Fondseitenverkleidung 11.

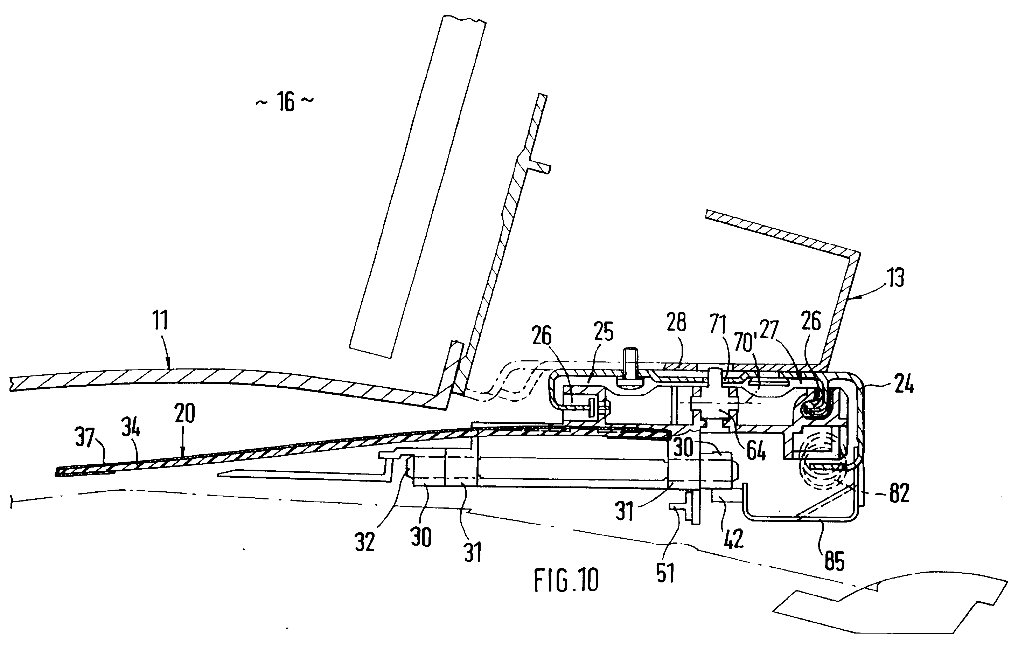

Die schlittenartige Führungseinrichtung 21 umfaßt ein aufbauseitig festgelegtes profiliertes Trägerteil 24 mit einer integrierten, sich in aufrechter Richtung erstreckendenden Führungsschiene 25, an der unter Zwischenschaltung von Gleitelementen 26 ein Schlitten 27 höhenverschiebbar gelagert ist. Die Führungsschiene 25 ist im Ausführungsbeispiel im Querschnitt gesehen etwa C-förmig profiliert. Sie kann jedoch auch eine andere Querschnittsform aufweisen. Trägerteil 24 und Führungschiene 25 sind vorzugsweise zu einem gemeinsamen Bauteil zusammengefaßt (beispielsweise ein Strangpreßprofil oder ein Gußteil). Das Trägerteil 24 mit der Führungsschiene 25 ist an einem angrenzenden seitlich außenliegenden vertikalen Holm 28 des querverlaufenden Hilfsrahmens 13 in Lage gehalten. Hierzu ist das Trägerteil 24 mit der Führungsschiene 25 auf die vertikale, in Fahrzeuglängsrichtung ausgerichtete Außenfläche des Holmes 28 aufgesetzt und durch Schrauben oder dgl. mit dem Hilfsrahmen 13 verbunden (Fig. 10). Der in der Führungsschiene 25 gleitend aufgenommene Schlitten 27 ist mittels eines seitlich angeformten Aufnahmeabschnittes 29 schwenkbar mit der Abdeckklappe 20 verbunden.

Hierzu sind an der Abdeckklappe 20 und am Schlitten 27 jeweils zwei beabstandete Scharnieraugen 30 bzw. 31 ausgebildet, die jeweils mit Öffnungen zum Hindurchführen eines langgestreckten Scharnierbolzens 32 versehen sind. Die Scharnieraugen 30 der Abdeckklappe 20 sind weiter voneinander entfernt als die des Schlittens 27 und liegen jeweils an der Außenseite der innenliegenden schlittenseitigen Scharnieraugen 31 an. Der Scharnierbolzen 32 ist örtlich mittels nicht näher dargestellter aufgesteckter Sicherungselemente 32 gegen axiales Verschieben gesichert. Der Scharnierbolzen 32 ist zwischen den beiden inneren schlittenseitigen Scharnieraugen 31 von einem Federelement 33 umgeben, das sich mit einem abgewinkelten Ende an der Innenseite der Abdeckklappe 20 und mit dem anderen abgewinkelten Ende an einem oberen Wandabschnitt des Schlittens 27 unter Vorspannung abstützt. Das Federelement 33 beaufschlagt die Abdeckklappe 20 nach unten in Richtung Schließen (Abdeckstellung C).

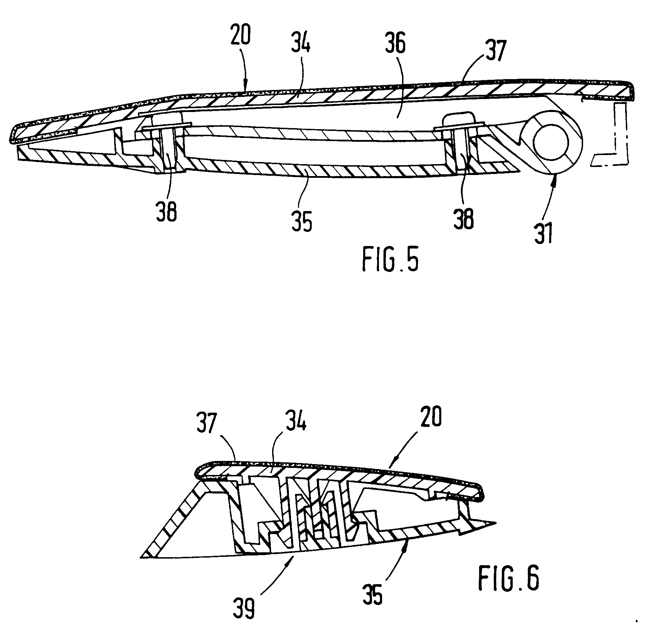

Die Abdeckklappe 20 setzt sich aus einer Oberschale 34, einer Unterschale 35 und einem zwischengeschalteten Scharnierteil 36 zusammen (Fig. 5).

Die Oberschale 34 ist außenseitig mit einem Bezug 37 - beispielsweise aus Verdeckstoff - versehen, der abschnittsweise um die Unterseite der Oberschale 34 herumgeführt ist.

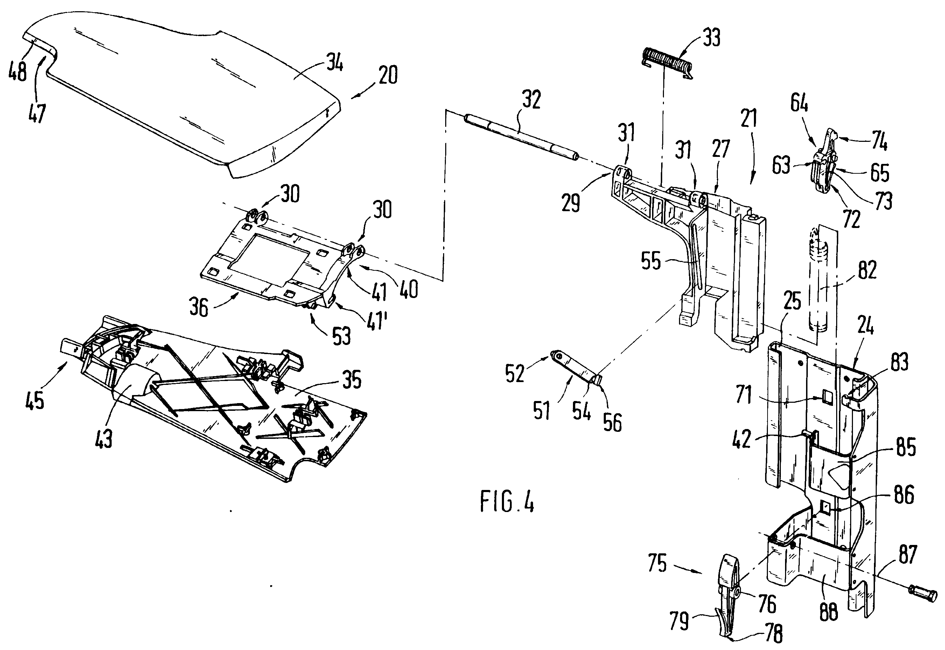

Das zwischen Oberschale 34 und Unterschale 35 angeordnete Scharnierteil 36 ist mittels Befestigungsschrauben 38 an der Unterschale 35 in Lage gehalten. Im Ausführungsbeispiel sind die beabstandeten Scharnieraugen 31 einstückig mit dem Scharnierteil 36 ausgebildet (Fig. 4).

Das Scharnierteil 36 bildet zusammen mit der Unterschale 35 eine vorgefertigte Baueinheit, an der die Oberschale 34 befestigbar ist. Der Erzielung einer gleichbleibenden umfangseitigen Fuge zwischen der Abdeckklappe 20 und den angrenzenden Bauteilen wird die lose mit dem Scharnierteil 36 verbundene Unterschale 35 mittels einer Lehre eingestellt, danach die Befestigungsschrauben 38 angezogen und zum Schluß wird die Oberschale montiert. Die Oberschale 34 ist mittels zumindest einer Clipsverbindung 39 und/oder einer Schraubverbindung oder dergleichen an der Unterschale 35 in Lage gehalten (Fig. 6). Die Oberschale 34 und die Unterschale 35 werden vorzugsweise durch Kunststoffteile gebildet und weisen aus Steifigkeitsgründen örtlich Versteifungsrippen auf (Fig. 4).

An der Unterseite der Abdeckklappe 20 oder am Scharnierteil 36 ist zumindest eine Kurvenbahn ausgebildet, die beim Bewegen der Abdeckklappe 20 von der Abdeckstellung C in die Freigabestellung D zumindest zeitweise mit einem korrespondierenden aufbauseitig feststehenden Gegenstück zusammenwirkt. Im Ausführungsbeispiel ist in einem äußeren Bereich 40 des Scharnierteiles 36 eine erste Kurvenbahn 41 vorgesehen, die mit einem am Trägerteil 24 angebrachten vorstehenden Zapfen 42 zusammenwirkt. Die erste Kurvenbahn 41 verläuft in Verlängerung des einen Scharnierauges 30 des Scharnierteiles 36 und erstreckt sich in Fahrzeugquerrichtung. Das dem Scharnierauge 30 abgekehrte Ende der Kurvenbahn 41 weist eine endseitige Rastnase auf.

Der vorstehende Zapfen 42 ist etwa horizontal ausgerichtet und erstreckt sich in Fahrzeuglängsrichtung; er ist am Trägerteil 24 angebracht. Der Zapfen 42 liegt an der Unterseite der Kurvenbahn 41 an.

An der Unterseite der Abdeckklappe 20 bzw. an der Unterschale 35 ist beabstandet zur ersten Kurvenbahn 41 eine zweite Kurvenbahn 43 angeordnet, die mit einem vom Verdecklager 6 nach oben hin abgestellten Führungsglied 44 zusammenwirkt (Fig. 4 und 7).

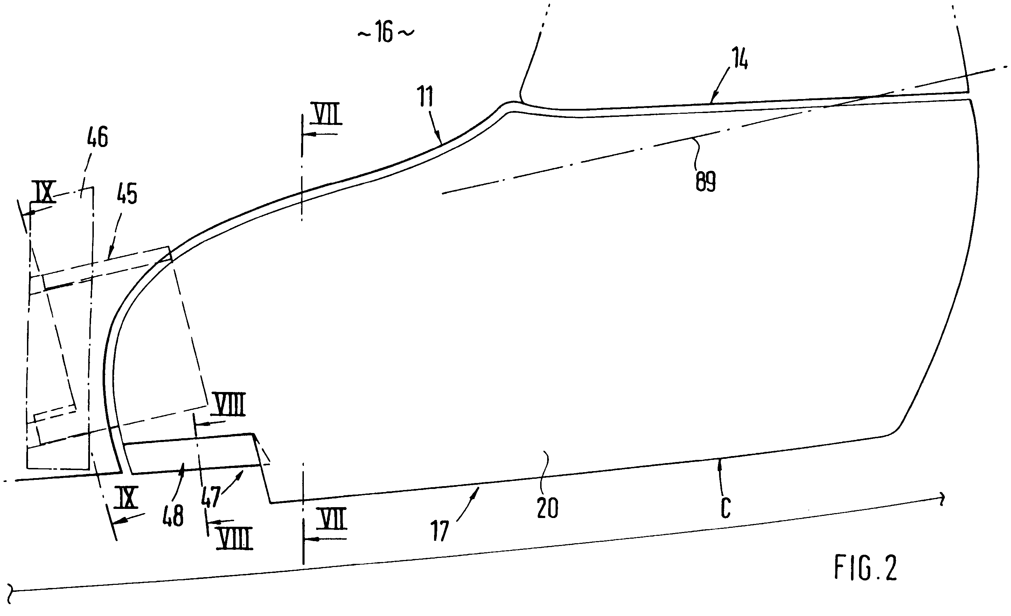

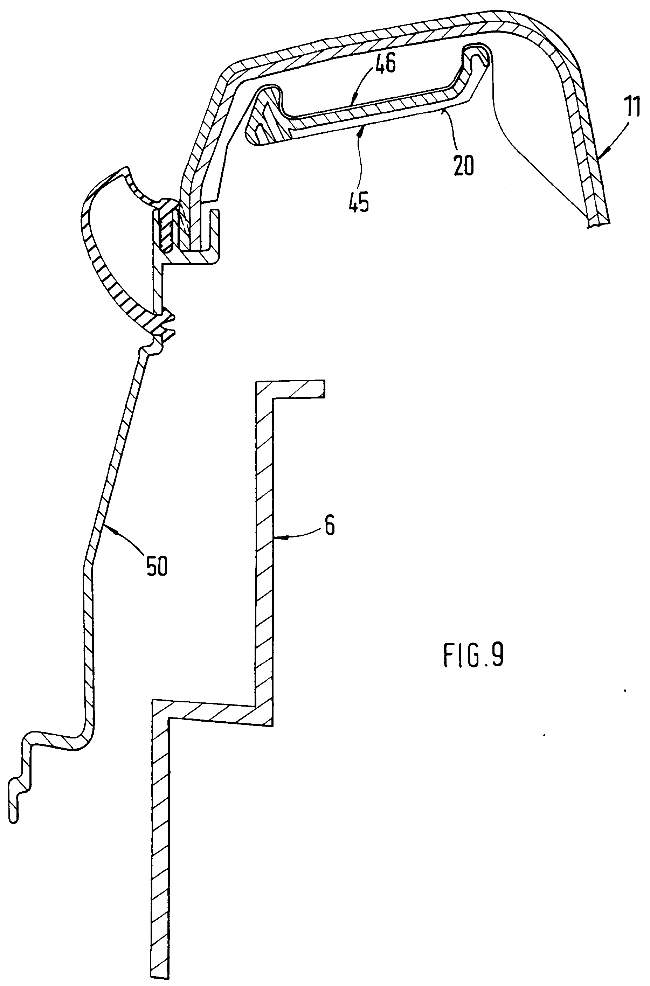

Die beiden Kurvenbahnen 41, 43 und die mit ihnen zusammenwirkenden Gegenstücke (Zapfen 42, Führungsglied 44) steuern die Dreh- bzw. Schwenkbewegung der Abdeckklappe 20. Ferner weist die Abdeckklappe 20 an ihrem der Führungseinrichtung 21 abgekehrten Ende zumindest eine vorstehende Anformung 45 auf, die in der Abdeckstellung der Abdeckklappe 20 formschlüssig in eine Aufnahme 46 der angrenzenden Fondseitenverkleidung 11 eingreift (Fig. 2 und 9). Die Anformung 45 weist einen Höhenversatz zur Oberseite der Abdeckklappe 20 auf und verläuft tieferliegend zu dieser. Die Anformung 45 wird von unten her gegen die Aufnahme 46 bewegt. Im Ausführungsbeispiel ist die Anformung 45 an der Unterschale 35 vorgesehen.

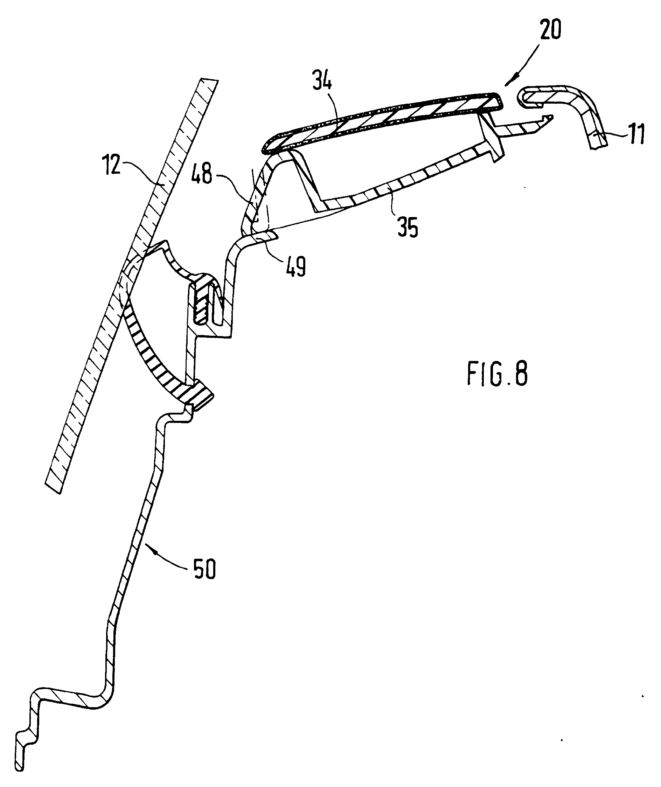

Benachbart der Anformung 45 ist an der Abdeckklappe 20, und zwar im Bereich einer eckseitigen Aussparung 47 für das Fondseitenfenster 12, ein aufrechter längsverlaufender Steg 48 angeformt, der mit seinem untenliegenden Randbereich an einem hochgezogenen Abstützflansch 49 einer Verkleidung 50 aufliegt (Fig. 8).

An der Abdeckklappe 20 ist benachbart der randseitigen ersten Kurvenbahn 41 ein Stützlenker 51 vorgesehen, der die Abdeckklappe 20 mit dem Schlitten 27 verbindet.

Der Stützlenker 51 ist an seinem einen Ende über Zapfenabschnitte 52 drehbar mit einem Lagerauge 53 der Abdeckklappe 20 verbunden. Das Lagerauge 53 ist ebenfalls in das Scharnierteil 36 integriert. Die Zapfenabschnitte 52 werden in das Lagerauge 53 eingeclipst.

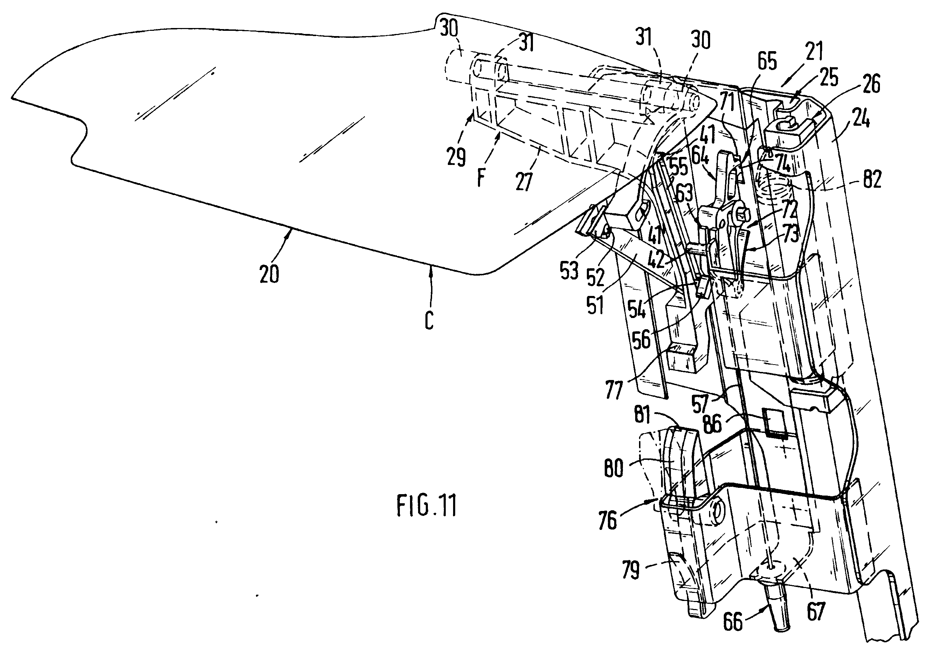

Ein am anderen Ende des Stützlenkers 51 vorgesehener abgestellter Gelenkbolzen 54 ragt durch eine aufrechte längliche Schlitzführung 55 des Schlittens 27 hindurch und ist in dieser verschiebbar gelagert. Der Stützlenker 51 wird durch ein Kunststoffteil gebildet. Der dem Schlitten 27 zugekehrte Gelenkbolzen 54 weist als Axialsicherung eine schmale, längliche Anformung 56 auf, wobei die Anformung 56 bei der Montage des Stützlenkers 51 durch die Schlitzführung 55 hindurchführbar ist. Danach wird der Stützlenker 51 verschwenkt, so daß die Anformung 56 quer zur Schlitzführung 54 verläuft und diese - in der Breite gesehen - überragt. Der Stützlenker 51 ist im Ausführungsbeispiel im Querschnitt gesehen etwa T-förmig profiliert (Fig. 11).

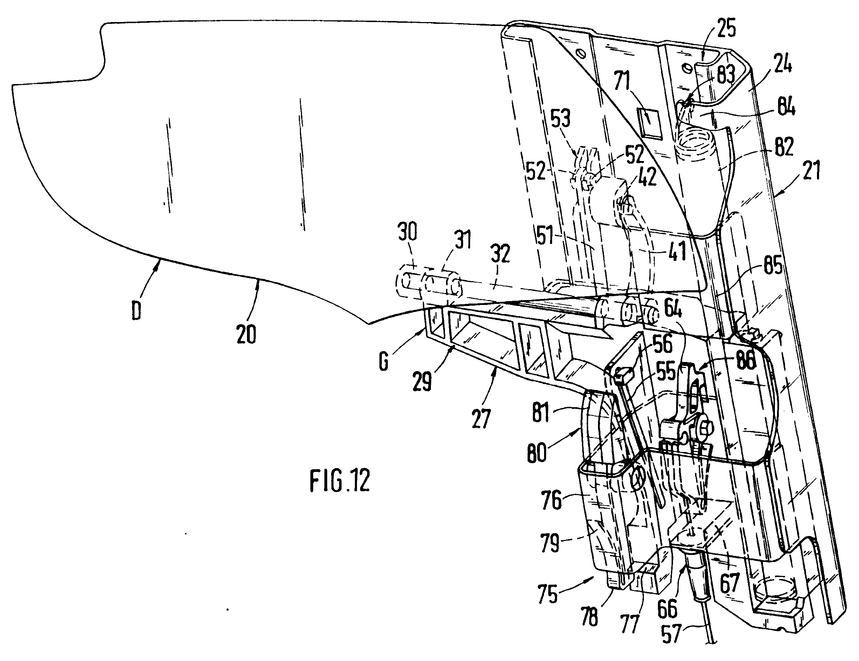

Die Bewegung der schlittenartigen Führungseinrichtung 21 bzw. der Abdeckklappe 20 ist an die Kinematik des angrenzenden Verdeckkastendeckels 5 angeschlossen, dergestalt, daß beim Öffnen des Verdeckkastendeckels 5 die Abdeckklappe 20 selbsttätig von der Abdeckstellung C in die Freigabestellung D bewegt wird, wobei der mit der Abdeckklappe 20 verbundene Schlitten 27 in der Führungseinrichtung 21 eine aufrechte lineare Verschiebebewegung von einer oberen Endstellung F (Fig. 11) nach unten in eine untere Endstellung G ausübt (Fig. 12).

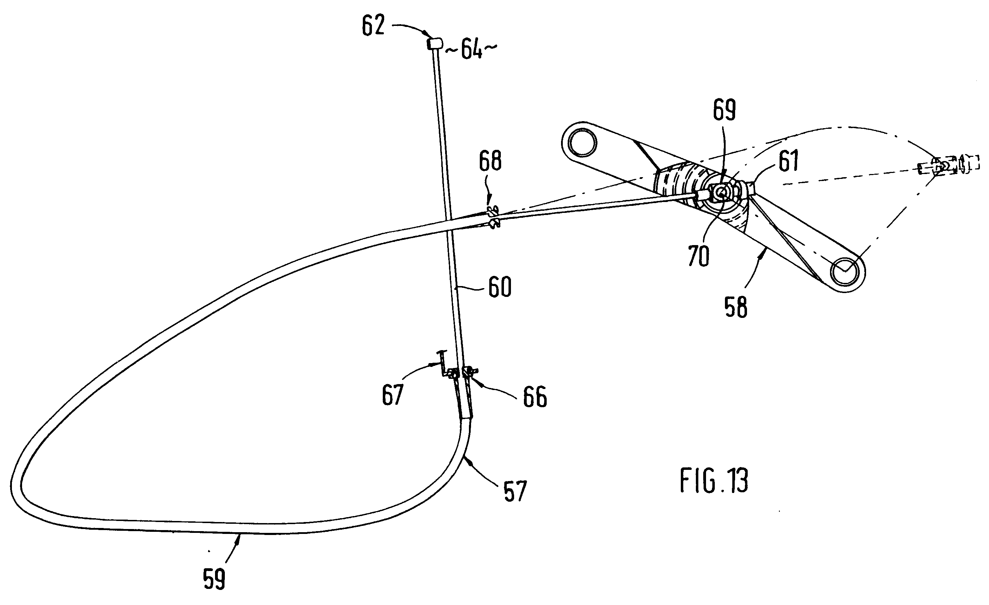

Der Verdeckkastendeckel 5 ist an seinen beiden Längsseiten jeweils über zwei nicht näher dargestellte Lenker mit dem festehenden Aufbau verbunden. Jede schlittenartige Führungseinrichtung 21 ist über einen Bowdenzug 57 mit dem - in Fahrtrichtung gesehen - vorneliegenden Lenker z.B. 58 des Viergelenkscharniers des Verdeckkastendeckels 5 verbunden (Fig. 13).

Der Bowdenzug 57 umfaßt eine Hülle 59 und einen in dieser geführten Draht 60, wobei der die Hülle 59 überragende Draht 60 an einem Ende einen Nippel 61 aufweist und am anderen Ende mit einem querverlaufenden zylindrischen Körper 62 verbunden ist.

Der das eine Ende des Drahtes 60 bildende zylindrische Körper 62 ist in eine korrespondierende Aufnahme 63 eines schwenkbaren Rasthakens 64 einer ersten lösbaren Verriegelung 65 eingehängt. Das dem Körper 62 zugekehrte Ende 66 der Hülle 59 ist an einer am unteren Ende des Trägerteils 24 angeordneten geschlitzten Lasche 67 festgelegt.

Das andere Ende 68 der Hülle 59 ist örtlich am Aufbau befestigt (nicht näher dargestellt). Zwischen dem Ende 68 der Hülle 59 und dem endseitigen Nipppel 61 ist der Draht 60 durch ein Aufnahmeorgan 69 hindurchgeführt, wobei das Aufnahmeorgan 69 mit einem vorstehenden zylindrischen Ansatz 70 in eine Öffnung des Lenkers 58 eingesetzt ist. Das Aufnahmeorgan 69 ist schwenkbar am Lenker 58 gelagert (Fig. 13).

Bei geschlossenem Verdeckkastendeckel 5 und geschlossener Abdeckklappe 20 ist der Schlitten 27 über die erste lösbare Verriegelung 65 in seiner oberen Endstellung F fixiert; der Nippel 61 des Bowdenzuges 57 liegt an der Außenseite des Aufnahmeorgans 69 an (Fig. 13).
Durch Bewegen des Verdeckkastendeckels 5 in seine Offenstellung wird der Bowdenzug 57 gestrafft und die erste lösbare Verriegelung 65 entriegelt.

Die erste Verriegelung 65 umfaßt einen am Schlitten 27 um eine horizontale, längsgerichtete Drehachse 70' gelagerten Rasthaken 64, der in der Verriegelungsstellung in eine fensterartige Ausnehmung 71 des Trägerteils 24 eingreift. Am federbelasteten Rasthaken 64 ist die zylindrische Aufnahme 63 zum Einhängen des zylindrischen Körpers 62 des Bowdenzuges 57 vorgesehen. Das Federelement 72 für den Rasthaken 64 kann durch eine Schenkelfeder oder eine einstückige blattfederartige Anformung 73 des Rasthakens 64 gebildet werden.

Beim Entriegeln durch den Bowdenzug 57 gelangt ein nasenartiger Vorsprung 74 des Rasthakens 64 außer Eingriff mit der fensterartigen Ausnehmung 71.

Die untere Endstellung des Schlittens 27 wird durch eine zweite lösbare Verriegelung 75 festgelegt. Diese umfaßt eine am Trägerteil 24 schwenkbar gelagerte, federbelastete Sperrklinke 76, die sich in der Verriegelungsstellung mit einem stufenförmigen Absatz 77 des Schlittens 27 formschlüssig zusammenwirkt. Das untere Ende 78 der Sperrklinke 76 liegt auf dem darunterliegenden Absatz 77 des Schlittens 27 auf und hält die Abdeckklappe 20 bei geschlossenem Verdeck in der unteren Stellung. Das Federelement für die Sperrklinke 76 wird durch eine einstückige blattfederartige Anformung 79 gebildet, die unter Vorspannung an der Innenseite des Trägerteiles 24 anliegt.

Die Sperrklinke 76 weist die Form eines Winkelhebels auf, wobei der nach oben vorstehende Hebelarm 80 eine endseitige Anlauffläche 81 aufweist. Beim Zurückschwenken des Verdeckgestänges 7 gelangt dieses in formschlüssigen Eingriff mit der Anlauffläche 81 und verschwenkt die Sperrklinke 76 , so daß diese außer Eingriff mit dem Schliffen 27 gelangt.

Der Schlitten 27 ist über eine aufrecht angeordnete Zugfeder 82 mit dem Tragerteil 24 verbunden, wobei die Zugfeder 82 den Schlitten nach 27 oben in seine obere Endstellung bewegt. Ein unteres Ende der Zugfeder 82 ist an der Unterseite des Schlittens 27 festgelegt. Das obere Ende der Zugfeder 82 ist in eine Einkerbung 83 einer am oberen Rand des Trägerteils 24 angebrachten Lasche 84 eingehängt.

Der vorstehende Bolzen 42 ist an einem abgewinkelten Blechteil 85 angebracht, das mit dem Trägerteil 24 fest verbunden ist (Schweißen, Nieten oder dergleichen). In der unteren Endstellung des Schlittens 27 greift der Rasthaken 64 in eine weitere Ausnehmung 86 des Trägerteils 24 ein. Die Sperrklinke 76 ist um eine horizontale Drehachse 87 an einem profilierten Blechteil 88 gelagert, wobei das Blechteil 88 mit dem Trägerteil 24 örtlich einen geschlossenen Rahmen bildet. In Fig. 2 ist die schrägverlaufende Drehachse 89 der Klappe 20 eingezeichnet.

## Patentansprüche

1. Abdeckklappe für eine oberhalb eines Verdecklagers befindliche Durchlaßöffnung (17) in einer Bordwand eines Fahrzeuges, die beim Herausschwenken eines im zugeordneten Verdeckkasten (4)abgelegten Verdecks (2) aus einer Abdeckstellung in eine aufgestellte Freigabestellung überführbar ist, **dadurch gekennzeichnet,** daß die Abdeckklappe (20) mit einer schlittenartigen Führungseinrichtung (21) in Wirkverbindung steht und in ihrer aufrechten Freigabestellung (D) versenkt unterhalb der Durchlaßöffnung (17) der Bordwand verläuft.

2. Abdeckklappe nach Anspruch 1, **dadurch gekennzeichnet,** daß die Bewegung der schlittenartigen Führungseinrichtung (21) bzw. der Abdeckklappe (20) an die Kinematik eines angrenzenden Verdeckkastendeckels (5) angeschlossen ist, dergestalt, daß beim Öffnen des Verdeckkastendeckels (5) die Abdeckklappe (20) selbständig von der Abdeckstellung (C) in die Freigabestellung (D) bewegt wird, wobei der mit der Abdeckklappe (20) verbundene Schlitten (27) der Führungseinrichtung (21) eine aufrechte Verschiebebewegung von einer oberen Endstellung (F) nach unten in eine untere Endstellung (G) ausübt.

3. Abdeckklappe nach den Ansprüchen 1 und 2, **dadurch gekennzeichnet,** daß die schlittenartige Führungseinrichtung (21) ein aufbauseitig festgelegtes profiliertes Trägerteil (24) mit einer integrierten aufrechten Führungsschiene (25) umfaßt, an der unter Zwischenschaltung von Gleitelementen (26) ein Schlitten (27) höhenverschiebbar aufgenommen ist.

4. Abdeckklappe nach den Ansprüchen 1 bis 3, **dadurch gekennzeichnet,** daß die Abdeckklappe (20) über eine leicht schräg verlaufende Drehachse (89) mit einem oberen Randabschnitt des Schlittens (27) schwenkbar verbunden ist.

5. Abdeckklappe nach Anspruch 4, **dadurch gekennzeichnet,** daß ein die Drehachse (89) bildender Scharnierbolzen (32) abschnittsweise von einem Federelement (33) umgeben ist, das sich mit einem Ende am Scharnierteil (36) der Abdeckklappe (20) und mit dem anderen Ende an einem oberen Wandabschnitt des Schlittens (27) unter Vorspannung abstützt und die Abdeckklappe (20) nach unten in Richtung Schließen bewegt.

6. Abdeckklappe nach Anspruch 3**, dadurch gekennzeichnet**, daß das Trägerteil (24) mit der Führungschiene (25) durch ein Strangpreßprofilteil aus einer Leichtmetallegierung gebildet wird.

7. Abdeckklappe nach einem oder mehreren der vorangegangenen Ansprüche, **dadurch gekennzeichnet,** daß sich die Abdeckklappe (20) aus einer Oberschale (34), einer Unterschale (35) und einem Scharnierteil (36) zusammensetzt.

8. Abdeckklappe nach einem oder mehreren der vorangegangenen Ansprüche, **dadurch gekennzeichnet,** daß am Scharnierteil (36) eine erste Kurvenbahn (41) angeordnet ist, die mit einem am Trägerteil (24) vorgesehenen vorstehenden Zapfen (42) in Wirkverbindung steht.

9. Abdeckklappe nach einem oder mehreren der vorangegangenen Ansprüche, **dadurch gekennzeichnet,** daß an der Unterschale (35) eine zweite Kurvenbahn (43) vorgesehen ist, die mit einem vom Verdecklager (6) nach oben hin abgestellten, am oberen Ende gerundeten Führungsglied (44) zusammenarbeitet.

10. Abdeckklappe nach einem oder mehreren der vorangegangenen Ansprüche, **dadurch gekennzeichnet,** daß an der Abdeckklappe (20) an dem der Führungseinrichtung (21) abgekehrten Endbereich zumindest eine vorstehende Anformung (45) vorgesehen ist, die in der Abdeckstellung (C) der Abdeckklappe (20) formschlüssig in eine Aufnahme (46) der angrenzenden Fondseitenverkleidung (11) eingreift, wobei die Anformung (45) die nach unten offene Aufnahme (46) untergreift.

11. Abdeckklappe nach einem oder mehreren der vorangegangenen Ansprüche, **dadurch gekennzeichnet,** daß der Schlitten (27) über eine erste lösbare Verriegelung (65) in seiner oberen Endstellung F am Trägerteil (24) festlegbar ist.

12. Abdeckklappe nach Anspruch 11, **dadurch gekennzeichnet,** daß die erste Verriegelung (65) einen am Schlitten (27) schwenkbar gelagerten federbelasteten Rasthaken (64) umfaßt, der in der Verriegelungsstellung in eine Ausnehmung (71) des Trägerteils (24) eingreift.

13. Abdeckklappe nach einem oder mehreren der vorangegangenen Ansprüche, **dadurch gekennzeichnet,** daß der Verdeckkastendeckel (5) über einen Bowdenzug (57) mit der schlittenartigen Führungseinrichtung (21) zusammenwirkt.

14. Abdeckklappe nach Anspruch 13, **dadurch gekennzeichnet,** daß der Bowdenzug (57) einerseits an einem Lenker (58) des Verdeckkastendeckelscharniers und andererseits an den federbelasteten Rasthaken (64) der ersten lösbaren Verriegelung (65) angeschlossen ist.

15. Abdeckklappe nach einem oder mehreren der vorangegangenen Ansprüche, **dadurch gekennzeichnet**, daß die untere Endstellung des Schlittens (27) durch eine zweite lösbare Verriegelung (75) festgelegt ist.

16. Abdeckklappe nach Anspruch 15, **dadurch gekennzeichnet,** daß die zweite lösbare Verriegelung (75) eine am Trägerteil (24) schwenkbar gelagerte federbelastete Sperrklinke (76) umfaßt, die in Verriegelungsstellung auf einem stufenförmigen Absatz (77) des Schlittens (27) formschlüssig aufliegt.

17. Abdeckklappe nach Anspruch 16, **dadurch gekennzeichnet,** daß die Sperrklinke (76) einen nach oben ragenden Hebelarm (80) mit einer Anlauffläche (81) aufweist, die beim Zurückschwenken des Verdeckgestänges (7) mit diesem in Berührung gelangt, wodurch die Sperrklinke (76) verschwenkt wird und außer Eingriff mit dem stufenförmigen Absatz (77) des Schlittens (27) gelangt.

18. Abdeckklappe nach einem oder mehreren der vorangegangenen Ansprüche, **dadurch gekennzeichnet,** daß die Abdeckklappe (20) benachbart der Führungsbahn (41) über einen Stützlenker (51) mit dem Schlitten (27) verbunden ist, wobei ein Ende des Stützlenkers (51) drehbar mit der Abdeckklappe (20) verbunden ist, und daß ein abgestellter Gelenkbolzen (54) des Stützlenkers (51) durch eine längliche Schlitzführung (55) des Schlittens (27) hindurchgeführt und in dieser verschiebbar gelagert ist.

19. Abdeckklappe nach einem oder mehreren der vorangegangenen Ansprüche, **dadurch gekennzeichnet,** daß der Schlitten (27) über eine aufrecht angeordnete Zugfeder (82) mit dem Trägerteil (24) verbunden ist, wobei die Zugfeder (82) den Schlitten (27) nach oben in seine obere Endstellung beaufschlagt.

20. Abdeckklappe nach einem oder mehreren der vorangegangenen Ansprüche, **dadurch gekennzeichnet,** daß die schlittenartige Führungseinrichtung (21) an einem seitlich außenliegenen, vertikalen Holm (28) eines aufbauseitig befestigten, querverlaufenden Hilfsrahmens (13) in Lage gehalten ist.

## Claims

1. A cover flap for a through opening (17) - present above a folding-top support - in a side wall of a vehicle, movable from a covering position into a raised release position when a folding top (2) folded down in the associated folding-top compartment (4) is pivoted outwards, **characterized in that** the cover flap (20) is operatively connected to a slide-like guide device (21) and in its upright release position (**D**) it extends at a lower level below the through opening (17) in the side wall.

2. A cover flap according to Claim 1, **characterized in that** the movement of the slide-like guide device (21) and the cover flap (20) is linked to the kinematics of an adjacent lid (5) of the folding-top compartment in such a way that when the lid (5) of the folding-top compartment is opened the cover flap (20) is moved automatically from the covering position (**C**) into the release position (**D**), wherein the slide (27) of the guide device (21) connected to the cover flap (20) performs a vertical displacement movement from an upper end position (**F**) downwards into a lower end position (**G**).

3. A cover flap according to Claims 1 and 2, **characterized in that** the slide-like guide device (21) comprises a profiled support part (24) secured to the body and having an integrated vertical guide rail (25) on which a slide (27) is received in a vertically displaceable manner with the interposition of sliding members (26).

4. A cover flap according to Claims 1 to 3, **characterized in that** the cover flap (20) is pivotably connected to an upper edge portion of the slide (27) by way of an axis of rotation (89) extending slightly obliquely.

5. A cover flap according to Claim 4, **characterized in that** a hinge pin (32) forming the axis of rotation (89) is surrounded in part by a spring member (33) supported at one end on the hinge part (36) of the cover flap (20) and at the other end on an upper wall portion of the slide (27) with pre-stressing, and the cover flap (20) moves downwards in the direction of closing.

6. A cover flap according to Claim 3, **characterized in that** the support part (24) with the guide rail (25) is formed by an extrusion-moulded profiled part consisting of a light-metal alloy.

7. A cover flap according to one or more of the preceding Claims, **characterized in that** the cover flap (20) is formed by an upper shell (34), a lower shell (35) and a hinge part (36).

8. A cover flap according to one or more of the preceding Claims, **characterized in that** a first curved path (41), operatively connected to a projecting pin (42) provided on the support part (24), is arranged on the hinge part (36).

9. A cover flap according to one or more of the preceding Claims, **characterized in that** a second curved path (43), which cooperates with a guide member (44) projecting upwards from the folding-top support (6) and rounded at its upper end, is provided on the lower shell (35).

10. A cover flap according to one or more of the preceding Claims, **characterized in that** at least one projecting integral attachment (45) is provided on the cover flap (20) in the end region remote from the guide device (21), and engages in a receiving means (46) of the adjacent rear-side lining (11) with positive locking in the covering position (**C**) of the cover flap (20), wherein the integral attachment (45) engages under the receiving means (46) open at the bottom.

11. A cover flap according to one or more of the preceding Claims, **characterized in that** the slide (27) is securable in the upper end position **F** thereof on the support part (24) by way of a first releasable locking means (65).

12. A cover flap according to Claim 11, **characterized in that** the first locking means (65) comprises a spring-loaded catching hook (64) pivotably mounted on the slide (27) and engaging in a recess (71) in the support part (24) in the locking position.

13. A cover flap according to one or more of the preceding Claims, **characterized in that** the lid (5) of the folding-top compartment cooperates with the slide-like guide device (21) by way of a Bowden cable (57).

14. A cover flap according to Claim 13, **characterized in that** the Bowden cable (57) is attached at one end to a control arm (58) of the hinge of the lid of the folding-top compartment and at the other end to the spring-loaded catching hook (64) of the first releasable locking means (65).

15. A cover flap according to one or more of the preceding Claims, **characterized in that** the lower end position of the slide (27) is fixed by a second releasable locking means (75).

16. A cover flap according to Claim 15, **characterized in that** the second releasable locking means (75) comprises a spring-loaded locking pawl (76) mounted pivotably on the support part (24) and resting in the locking position on a stepped offset (77) of the slide (27).

17. A cover flap according to Claim 16, **characterized in that** the locking pawl (76) has an upwardly projecting lever arm (80) with a run-up face (81), coming into contact with the folding-top linkage (7) when the said folding-top linkage (7) is pivoted back, as a result of which the locking pawl (76) is pivoted and moves out of engagement with the stepped offset (77) of the slide (27).

18. A cover flap according to one or more of the preceding Claims, **characterized in that** adjacent to the guide path (41) the cover flap (20) is connected to the slide (27) by way of a supporting control arm (51), wherein one end of the supporting control arm (51) is connected rotatably to the cover flap (20), and a projecting pivot pin (54) of the supporting control arm (51) passes through an elongate slotted guide (55) of the slide (27) and is mounted displaceably therein.

19. A cover flap according to one or more of the preceding Claims, **characterized in that** the slide (27) is connected to the support part (24) by way of a tension spring (82) arranged vertically, wherein the tension spring (82) urges the slide (27) upwards into its upper end position.

20. A cover flap according to one or more of the preceding Claims, **characterized in that** the slide-like guide device (21) is held in position on a vertical crosshead (28) situated laterally on the outside - of a transversely extending auxiliary frame (13) secured to the body.

## Revendications

1. Clapet d'obturation d'une ouverture de passage (17), située au-dessus d'un palier de capote dans une paroi de côté d'un véhicule, lequel clapet lors du pivotement, vers l'extérieur, d'une capote (2) rangée dans un coffre de capote (4) correspondant, peut passer d'une position d'obturation à une position dressée de dégagement, caractérisé en ce que le clapet d'obturation (20) est en liaison active avec un dispositif de guidage (21) du type à chariot, et dans sa position dressée de dégagement (D), s'étend encastré au-dessous de l'ouverture de passage (17) de la paroi de côté.

2. Clapet d'obturation selon la revendication 1, caractérisé en ce que le mouvement du dispositif de guidage (21), du type à chariot, ou du clapet d'obturation (20) est lié à la cinématique d'un couvercle (5) adjacent d'un coffre de capote, de manière que lors de l'ouverture du couvercle (5) le clapet d'obturation (20) se déplace automatiquement de la position d'obturation (C) dans la position de dégagement (D), le chariot (27) du dispositif de guidage (21), relié au clapet d'obturation (20), exécutant un mouvement de coulissement vertical depuis une position de fin de course haute (F) vers le bas, dans une position de fin de course basse (G).

3. Clapet d'obturation selon les revendication 1 et 2, caractérisé en ce que le dispositif de guidage (21) du type à chariot comprend un élément de support (24) profilé, fixé à la carrosserie, avec un rail de guidage (25) vertical intégré, sur lequel un chariot (27) peut coulisser en hauteur par interposition d'éléments de glissement (26).

4. Clapet d'obturation selon les revendications 1 à 3, caractérisé en ce que le clapet d'obturation (20) est monté pivotant sur une partie de bordure supérieure du chariot (27), par un axe de rotation (89) légèrement oblique.

5. Clapet d'obturation selon la revendication 4, caractérisé en ce qu'un axe de charnière (32), formant l'axe de rotation (89), est entouré par endroits par un élément à ressort (33), qui prend appui, sous précontrainte, par une extrémité contre l'élément formant charnière (36) du clapet d'obturation (20) et par l'autre extrémité, contre une partie de paroi supérieure du chariot (27), et le clapet d'obturation (20) se déplace vers le bas dans le sens de la fermeture.

6. Clapet d'obturation selon la revendication 3, caractérisé en ce que l'élément de support (24) avec le rail de guidage (25) est formé par un élément profilé extrudé fait d'un alliage léger.

7. Clapet d'obturation selon une ou plusieurs des revendications précédentes, caractérisé en ce que le clapet d'obturation (20) se compose d'une coque supérieure (34), d'une coque inférieure (35) et d'un élément formant charnière (36).

8. Clapet d'obturation selon une ou plusieurs des revendications précédentes, caractérisé en ce que sur l'élément formant charnière (36) est disposée une première voie courbée (41) qui est en liaison active avec un teton (42) saillant, prévu sur l'élément de support (24).

9. Clapet d'obturation selon une ou plusieurs des revendications précédentes, caractérisé en ce que sur la coque inférieure (35) est prévue une deuxième voie courbée (43) qui coopère avec un organe de guidage (44) arrondi à son extrémité supérieure, éloigné vers le haut du palier de capote (6).

10. Clapet d'obturation selon une ou plusieurs des revendications précédentes, caractérisé en ce que sur le clapet d'obturation (20), dans la zone terminale tournée à l'opposé du dispositif de guidage (21), il est prévu au moins un bossage (45) saillant, qui s'engage, dans la position d'obturation (C) du clapet d'obturation (20), par complémentarité de forme, dans un logement (46) du revêtement latéral arrière (11) adjacent, le bossage (45) passant sous le logement (46) ouvert vers le bas.

11. Clapet d'obturation selon une ou plusieurs des revendications précédentes, caractérisé en ce que le chariot (27) peut être fixé sur l'élément de support (24) dans sa position de fin de course haute (F) par un premier verrouillage (65) non permanent.

12. Clapet d'obturation selon la revendication 11, caractérisé en ce que le premier verrouillage (65) comprend un crochet d'encliquetage (64) soumis à l'action d'un ressort et monté pivotant sur le chariot (27), lequel crochet d'encliquetage s'engage, dans la position de verrouillage, dans un évidement (71) de l'élément de support (24).

13. Clapet d'obturation selon une ou plusieurs des revendications précédentes, caractérisé en ce que le couvercle (5) du coffre de capote coopère avec le dispositif de guidage (21) du type à chariot, par un câble Bowden (57).

14. Clapet d'obturation selon la revendication 13, caractérisé en ce que le câble Bowden (57) est raccordé d'une part à un bras oscillant (58) de la charnière du couvercle du coffre de capote et d'autre part au crochet d'encliquetage (64) soumis à l'action d'un ressort du premier verrouillage (65) non permanent.

15. Clapet d'obturation selon une ou plusieurs des revendications précédentes, caractérisé en ce que la position de fin de course basse du chariot (27) est fixée par un deuxième verrouillage (75) non permanent.

16. Clapet d'obturation selon la revendication 15, caractérisé en ce que le deuxième verrouillage (75) non permanent comprend un cliquet de blocage (76) soumis à l'action d'un ressort et monté pivotant sur l'élément de support (24), lequel cliquet de blocage repose par complémentarité de forme, dans la position de verrouillage, sur un épaulement (77) en forme de gradin du chariot (27).

17. Clapet d'obturation selon la revendication 16, caractérisé en ce que le cliquet de blocage (76) présente un bras de levier (80) dépassant vers le haut avec une surface de came (81), qui lors du pivotement en retour de la tringlerie (7) de la capote, vient en contact avec cette tringlerie, ce qui fait que le cliquet de blocage (76) pivote et est dégagé de l'épaulement (77) en forme de gradin du chariot (27).

18. Clapet d'obturation selon une ou plusieurs des revendications précédentes, caractérisé en ce que le clapet d'obturation (20) est relié au chariot (27), au voisinage de la voie de guidage (41), par l'intermédiaire d'un bras oscillant d'appui (51), une extrémité du bras oscillant d'appui (51) étant reliée à rotation au clapet d'obturation (20), et en ce qu'un axe d'articulation (54), muni d'un arrêtoir, du bras oscillant d'appui (51) passe à travers un guide à fente (55) allongé du chariot (27) et est monté dans celui-ci de manière à pouvoir coulisser.

19. Clapet d'obturation selon une ou plusieurs des revendications précédentes, caractérisé en ce que le chariot (27) est relié à l'élément de support (24), par un ressort de traction (82) disposé verticalement, le ressort de traction (82) sollicitant le chariot (27) vers le haut dans sa position de fin de course haute.

20. Clapet d'obturation selon une ou plusieurs des revendications précédentes, caractérisé en ce que le dispositif de guidage (21) du type à chariot est maintenu en position contre un montant vertical (28), situé à l'extérieur latéralement, d'un cadre auxiliaire transversal (13) fixé à la carrosserie.
